# EUROPEAN PATENT APPLICATION

(11) **EP 2 420 953 A1**
(43) Date of publication of application: **22.02.2012**
(21) Application number: 10173585.0
(22) Date of filing: 20.08.2010
(51) Int. Cl.: G06K 7/00

(54) **An interface device for connecting an electronic chip to a host device**

(71) Applicant: SmarDTV S.A., 1033 Cheseaux-sur-Lausanne (CH)
(72) Inventor: Lambert, Marc, 13390 Auriol (FR)
(74) Representative: Leman Consulting S.A.

(57) **Abstract**

The present invention provides an interface device for use within a PCMCIA module allowing an interface to be made between an electronic chip on a chip card and a host device. The invention dispenses with the use of industry-standard smartcard connectors to make connection between the chip on the chip card and a printed circuit board providing the interface functionality within the PCMCIA module and makes use of a set of conductive tracks placed either within the housing of the PCMCIA module or within a specially adapted spacer or frame.

## Description

### INTRODUCTION

The present invention relates to an interface device to connect a chip card to a computing device such as a digital television multimedia unit, a television set, a personal computer or the like. More precisely, the interface device conforms to the PCMCIA standard. The invention is of particular use in the domain of conditional access modules (CAM) and may conform to the Common Interface standard (ClCAM).

### STATE OF THE ART

Various different types of multimedia apparatus such as digital TV decoders, TV sets having integrated digital receivers, personal computers etc. may be used to extract and decode audio/visual data for display on an appropriate viewing apparatus such as a TV display or a personal computer display or other suitable device. It is common for the audio/video data to be protected against non-authorised access, such access being subject to the payment of a fee and such protection being imparted by encrypting the audio/video data according to a pre-determined conditional access policy. The multimedia apparatus usually comprises a conditional access module (CAM) configured to allow a user having paid for access to the audio/visual data to decrypt the encrypted audio/visual data.

The CAM is generally provided by a pay-TV operator and is adapted to decrypt audio/video data usually arriving in the form of digital data streams from a terrestrial transmitter, a satellite, an internet server, a cable network or a wireless network etc. Along with the audio/video content, the pay-TV operator or provider also makes available the keys or control words necessary to decrypt the content using the CAM, the keys or control words being provided in encrypted format. A security module, reputed to be tamperproof and secure, is provided to the user for storing security information such as keys and rights necessary for authentication and to allow the CAM to proceed with decryption. The security module usually is in the form of an electronic chip housed on a chip card which can be inserted into a card reader of the CAM. The security module is thus said to be detachable.

An interface device, or contact unit, equipped with a chip card reader is usually provided to allow the user to provide the CAM with the appropriate authorisation data such as rights and keys from the detachable security module. The interface device usually takes the form of a detachable box of standardised dimensions, such as a PCMCIA module.

European Patent Publication EP0735507B1 describes a contact unit in the form of a housing according to the PCMCIA standard, designed to hold a smartcard. The unit comprises a printed circuit board onto which a set of contact elements are attached in a way which will allow contact to be made with the contacts of the smartcard's chip once the smartcard is inserted into the contact unit.

Similarly, United States Patent Publication Number 6324064 B1 describes an interface device for chip cards in standard credit card format. The device has a flat housing in a standard PCMCIA format with a plug-in socket on one end, suitable for interfacing to a computing device, and a slot on the other end for inserting the chip card. A printed circuit board with various electrical components and a contact group resides inside the housing. The contact group is designed to enter into contact with the smartcard's chip when the smartcard is inserted into the slot.

The CAM devices described in the prior art therefore generally comprise a printed circuit board which houses electronic components necessary to realise the chip card reader function and other necessary CAM functions. The printed circuit board also houses a more or less standard chip card connector or socket for making contact with the chip card once inserted into the CAM. These sockets are generally made of a thermoplastic or other insulating material and comprise resilient metal connections for making contact with the chip on the chip card.

Indeed, due to the requirement to adhere to many very firmly-established standards used in the domain of PCMCIA cards regarding the physical dimensional constraints imposed on such cards and on the widely accepted use of the standard chip-card connectors, inventive techniques have to used to address the inconveniences of the state of the art PCMCIA CAMs while still adhering to the minimum requirements of the imposed standard.

### BRIEF SUMMARY OF THE INVENTION

The use of the industry standard smart card socket, and the like, results in an unfortunate phenomenon whereby the socket occupies a significant amount of space on the printed circuit board to the detriment of the other necessary electronic components. Furthermore, the printed circuit board usually has to be cut or drilled in order to house the socket, thereby creating a region of mechanical weakness on the printed circuit board. The inclusion of the socket on the printed circuit board therefore leads to mechanical weakness, a significant burden on the use of board space and an inefficient use of the remaining available board space, thus leading to problems in heat dissipation and, depending on how the electronic components are placed on the remaining available space, electromagnetic interference (EMI) problems. In order to remedy this problem, the present invention provides an interface device for conditional access to audio/video content, said interface device comprising a printed circuit board having at least one conductive track, said interface device characterised in that:
it comprises at least one conductive strip having a first end and a second end, at least said first end of said conductive strip comprising a resilient contact, the second end of said conductive strip being adapted to connect electrically to the conductive track, said electrical connection being on a first plane substantially coincident with a plane of the printed circuit board, said resilient contact being oriented towards the printed circuit board and on a second plane parallel to and non-coincident with the printed circuit board.

The invention also provides a non-conducting spacer comprising a conductive strip having at least two ends, a first end of said conductive strip comprising a resilient contact, a second end of said conductive strip being adapted to make electrical contact with a planar element, said planar element lying on a first plane, said conductive strip characterised in that:
the resilient contact is oriented towards the planar element and lies on a second plane parallel to and not coincident with first plane.

The invention further provides a method for assembling an interface device for conditional access to audio/video content, said interface device conforming to a PCMCIA Standard and comprising a printed circuit board having at least one conductive track and at least one conductive strip having at least two ends, a first end comprising a resilient contact, a second end adapted to form an electrical connection with the conductive track, said method comprising:
placing said conductive strip in the interface device in such a way that its second end forms an electric contact with the conductive track and the resilient contact lies on a plane parallel and not coincident with a plane of the printed circuit board, said resilient contact facing the printed circuit board.

The invention allows for the reduction of electromagnetic interference in PCMCIA modules, improvements in heat dissipation management within such modules and better mechanical strength of the printed circuit board in the PCMCIA module.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1 illustrates a chip card and its corresponding interface device as is generally known from the state of the art in the domain.
Fig. 2 shows a cross-sectional detail of the state of the art interface device with its chip card inserted.
Fig. 3 illustrates an interface device according to an embodiment of the present invention.
Fig. 4a illustrates the use of a spacer to hold a conductive strip in an embodiment of the present invention.
Fig. 5a shows a detailed view of a spacer which may be used in an embodiment of the present invention.
Fig. 6 illustrates a top view of an interface device according to an embodiment of the present invention, showing the incorporation of the spacer into a guide outlining the housing.
Fig. 7 shows several views of a printed circuit board and spacer/strips/guide assembly which may be deployed in an embodiment of the present invention.
Fig. 8 shows several views of a printed circuit board, spacer/strips/guide and frame assembly including a bottom case, which may be deployed in another embodiment of the present invention.

### DETAILED DESCRIPTION

The present invention addresses the problems seen in the prior art related to chip card interface devices as described above, namely the better management of heat dissipation and EMI properties on a printed circuit board typically employed in a chip card interface device, the better mechanical strength properties and the better management of real estate on such printed circuit boards. Improvements in efficiency during manufacture of such devices are also demonstrated.

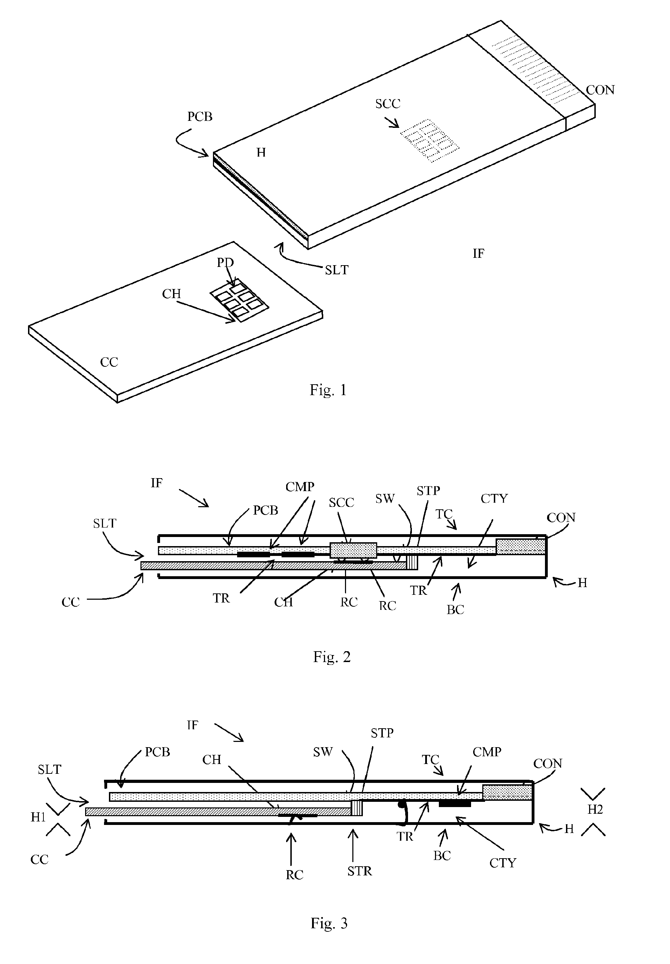

Fig. 1 shows a chip card (CC) with its electronic chip (CH) having a plurality of contact pads (PD) and an example of a chip card interface device (IF) indicating a region inside the interface device (IF) where, according to the state of the art in the domain, a smartcard connector (SCC) would be placed in order to make contact with the electronic chip (CH) when the chip card (CC) is inserted into the slot (SLT) in the interface device (IF). Thanks to the connector panel (CON) the interface device (IF) can be plugged into a host device to serve as an interface between the electronic chip (CH) and the host device.

Fig. 2 shows a cross-sectional view of a chip card (CC) in its interface device (IF) presently known from the state of the art. The interface device (IF) comprises a housing (H) of a format whose physical dimensions comply with those specified in the PCMCIA Standard for plug-in cards. The housing (H) may be made of a top case (TC) and a bottom case (BC), suitably attached to each other to form a cavity (CTY) within the housing (H). One end of the housing (H) is closed off by a connector panel (CON) designed to make contact between the interface device (IF) and a host device such as a computer, a multimedia unit or the like, having an accommodation channel to receive the PCMCIA-format interface device (IF). The accommodation channel has a socket at its end for connecting to the connector panel (CON) once the interface device (IF) is inserted into the accommodation channel. The other end of the housing (H) is open and forms a slot (SLT) of appropriate dimension to receive a chip card (CC) into the cavity (CTY) formed between the top case (TC) and the bottom case (BC). Within the housing (H) there is a printed circuit board (PCB), connected to the connector panel (CON). The printed circuit board (PCB) is disposed within the cavity (CTY) in such a way as to leave a space between the bottom case (BC) and the printed circuit board (PCB). The space is of sufficient dimension for the chip card (CC) to be able to be inserted at least part of the way into the cavity (CTY) via the slot (SLT). The depth to which the chip card (CC) may be inserted may be dictated using a suitably disposed card stop (STP) within the cavity (CTY) to limit the travel of a chip card (CC) once inserted into the slot (SLT). A means for detecting the presence of the chip card (CC) may also be included, usually via detector switches (SW) placed on the printed circuit board (PCB), the switches (SW) being activated by the chip card (CC) as it makes its way towards the limit of its travel.

The printed circuit board (PCB), also shown in Fig. 2, comprises a smart card connector (SCC) having a set of resilient contacts (RC). The resilient contacts (RC) are connected to conductive tracks (TR) on the printed circuit board (PCB) and these conductive tracks (TR) may be connected either directly to any of the connections on the connection panel (CON) or via any number of passive or active electronic components (CMP) designed to serve a particular predetermined function. Other conductive tracks (TR) may be incorporated on the printed circuit board (PCB) to form connections between the electronic components (CMP) or from an electric component (CMP) to the connection panel (CON). For example in the case where the interface device (IF) serves as a conditional access module (CAM) having decryption capabilities, such electronic components (CMP) and the conductive tracks (TR) may be configured to form an interface with the electronic chip (CH), realise the required decrypting function and communicate with the host device via the connection panel (CON).

As is generally known, a chip card (CC) usually takes the physical form of a standard credit card and it has an electronic chip (CH) embedded, usually near one corner. Electrical connection to the electronic chip is achieved via a set of contact pads (PD). The contact pads (PD) appear on a face of the chip card and preferably do not coincide with any edges of the card. A chip card (CC) with its electronic chip (CH) is illustrated in Fig. 1 and in Fig. 2. The chip (CH) has a plurality of terminals through which electronic communication may be achieved. In one embodiment such communication is via hard-wired connections, whereas is another embodiment the communication could be wireless. In the embodiment using hard-wired connections, the plurality of terminals is connected to a set of a plurality of contact pads (PD) on a surface of the chip card (CC). When the chip card (CC) is inserted into the cavity (CTY) of the interface device (IF) via the slot (SLT), the contact pads (PD) are urged against the resilient contacts (RC) of the printed circuit board's (PCB) suitably positioned smart card connector (SCC) such that electronic contact is formed between the electronic chip (CH) and the printed circuit board (PCB).

Fig. 3 illustrates a preferred embodiment of the present invention. As described above, an interface device (IF) comprises a housing (H) formed by a top case (TC) and a bottom case (BC). One end of the housing (H) is closed off by a connector panel (CON), while the other end has a slot (SLT). The cavity (CTY) formed in the housing (H) between the top (TC) and bottom cases (BC) comprises a printed circuit board (PCB) however the printed circuit board (PCB) in this case is devoid of any smart card connector (SCC). In a preferred embodiment of the present invention the printed circuit board (PCB) is disposed within the cavity (CTY) in such a way as to leave a space for a chip card (CC) to be inserted between the printed circuit board (PCB) and the bottom case (BC), however in another embodiment it is equally possible for the printed circuit board (PCB) to be placed such that the space for the chip card (CC) is between the printed circuit board (PCB) and the top cover (TC).

According to a preferred embodiment of the present invention, the bottom case (BC) further comprises a first set of a plurality of resilient contacts (RC), positioned in such a way that when a chip card is (CC) inserted into the slot (SLT) with the chip card's (CC) electronic chip (CH) oriented towards the bottom case (BC), the electronic chip's (CH) contact pads (PD) are urged against the first set of resilient contacts (RC) in the bottom case (BC). In another embodiment, where the space for the chip card is (CC) between the printed circuit board (PCB) and the top cover (TC), the first set of resilient contacts (RC) are rather in the top case (TC) and contact is made between the electronic chip's (CC) contact pads (PD) and the first set of resilient contacts (RC) when the chip card (CC) is inserted into the slot (SLT) with the electronic chip (CH) facing the top cover (TC). In more general terms then, it suffices to say that the first set of resilient contacts (RC) are in the housing (H), since the housing (H) comprises the top case (TC) and the bottom case (BC), and the electronic chip (CH) is oriented towards the first set of resilient contacts (RC). The common characteristic in the two embodiments described is that the chip card is inserted with the contact pads facing away from the printed circuit board. In other words, the resilient contacts face the printed circuit board.

According to the embodiments described, each contact from the first set of resilient contacts (RC) is connected to a first end of a conductive strip (STR) which is embedded within the housing (H). By embedded, it is meant held within appropriately cut grooves in the housing (H). This is appropriate when the housing (H) is made of a conductive material and the strip (STR) is insulated using a non-conductive material and held in the groove. However, in an embodiment where at least one of the cases of the housing (H) is made from a non-conductive material, the embedded conductive strips (STR) without insulation could either be attached to the housing (H) directly or within grooves cut in the housing (H) or within the bulk of the housing (H).

The conductive strips (STR) preferably have two ends according to the embodiment of the present invention. For the sake of identification the first end mentioned above is denoted the chip end and the second end is denoted the board end. The board end of the conductive strip (STR) is brought into contact with at least one of the conductive tracks (TR) of the printed circuit board (PCB) to be further connected to one of the electronic components (CMP) on the board (PCB) or to the connection panel (CON) in a similar manner to the example of the prior art described above.

According to a preferred embodiment of the present invention, the chip end of the conductive strip (STR) and the first resilient contact (RC) at the chip end of the conductive strip (STR) may be made from one and the same piece of conductive material. That is to say the conductive strip (STR) incorporates the first resilient contact (RC) at the chip end. This may be achieved by making the conductive strip (STR) from a thin strip of metallic material and bending the chip end of the metallic strip up and back down again to form the first resilient contact (RC). The top of the first resilient contact (RC) at the chip end sits at a first height (H1) above the inside of the housing (H) in such a way that the first resilient contact (RC) is urged against the contact pad (PD) of the electronic chip (CH) when the chip card (CC) is inserted into the slot (SLT) with the contact pad (PD) facing the first resilient contact (RC) i.e. with the contact pad facing away from the printed circuit board. It should be noted that the first resilient contacts (RC) thus described are preferably of rounded shape thus presenting a smooth surface in order to facilitate the sliding over the chip card (CC) surface as the chip card (CC) makes its way through the cavity (CTY) towards the limit of its travel (STP) where the first resilient contacts (RC) will rest against the contact pads (PD) of the electronic chip (CH). Likewise, the board end of the conductive strip (STR) may be bent up and back down again to form a second resilient contact (RC) at the board end, the top of the second resilient contact (RC) at the board end being at a second height (H2) above the inside of the housing (H) such that it is urged against an appropriate track (TR) of the printed circuit board (PCB).We therefore have a first resilient contact at the chip end of the conductive strip connected to a corresponding second resilient contact at the board end of the conductive strip. Similarly, we have a plurality of second resilient contacts each corresponding to one from the plurality of first resilient contacts. Other embodiments of the present invention feature a permanent contact of the board end of the conductive strip (STR) to the conductive track (TR) rather than a second resilient contact (RC) at the board end of the conductive strip (STR). Such a permanent contact can be achieved through soldering for example.

According to another preferred embodiment of the present invention, rather than the conductive strips (STR) with their resilient contacts (RC) being incorporated in the housing (H), use is made of a spacer (SPC) to house the conductive strips (STR). The spacer (SPC) is non-conducting and preferably made from a plastic material. The spacer (SPC) is placed within the cavity (CTY) in the space between the printed circuit board (PCB) and the housing (H) - in a preferred embodiment, between the printed circuit board (PCB) and the bottom cover (BC). The spacer (SPC) has two ends, namely a chip end and a board end and is placed longitudinally in the space such that its chip end is orientated towards the slot (SLT) and its board end is orientated towards the connector panel (CON) with at least one face lying facing the tracks (TR) of the printed circuit board (PCB) to which connection is to be made. With the spacer thus placed, a small opening remains in the vertical direction between the spacer (SPC) and the printed circuit board (PCB), this small opening being large enough to receive the electronic chip (CH), preferably on its chip card (CC) as the chip card (CC) is inserted into the slot (SLT). A similar discussion applies to an embodiment wherein the spacer is placed between the printed circuit board and the top cover.

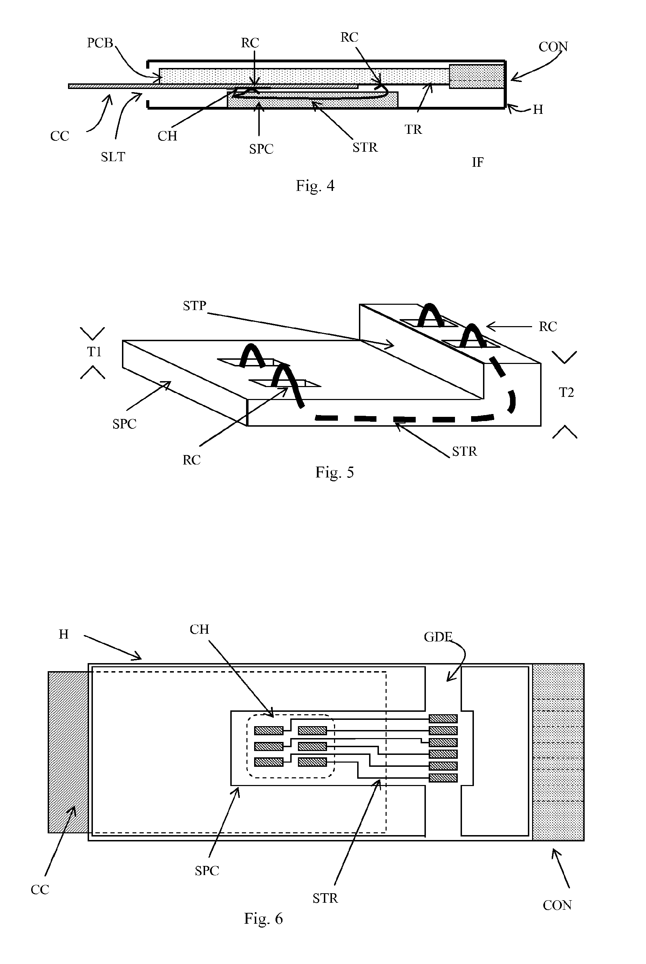

As mentioned above, the conductive strips (STR) used for connecting the contact pads (PD) of the electronic chip (CH) to the conductive tracks (TR) of the printed circuit board (PCB) are incorporated on or in the spacer (SPC). In one embodiment the conductive strips (STR) are buried within the spacer (SPC), with the resilient contacts (RC) on the chip end of the spacer (SPC) protruding past a face of the spacer though holes appropriately cut in a first region of the spacer (SPC) to allow them to do so. Similarly, the resilient contacts (RC) on the board end of the spacer (SPC) protrude past a face of the spacer (SPC) through holes appropriately cut in a second region of the spacer (SPC) to allow them to do so. In this way, the resilient contacts (RC) at the chip end of the spacer (SPC) will be urged against the contact pads (PD) of the electronic chip (CH) as the chip card (CC) is pushed through the opening via the slot (SLT) and the resilient contacts (RC) at the board end of the spacer (SPC) will be urged against the conductive tracks (TR) of the printed circuit board (PCB) thus forming the desired contact between the electronic chip (CH) and the printed circuit board (PCB). Fig. 4 illustrates an example of one way that the spacer (SPC) could be placed in order to achieve the desired goal. It shows an embodiment where the spacer is placed between the bottom case and the printed circuit board. The chip card (CC) is inserted into the slot (SLT) with the opening being between the printed circuit board (PCB) and the spacer (SPC). The resilient contacts (RC) on the chip end of the spacer (SPC) and the resilient contacts (RC) on the board end of the spacer (SPC) all protrude through or past the same face of the spacer (SPC) so that when the chip card is inserted with the contact pads facing away from the printed circuit board (facing the bottom cover), contact is made between the electronic chip and the printed circuit board.

In one embodiment of the present invention, the spacer (SPC) is fixed to the printed circuit board (PCB) therefore allowing the contact with the printed circuit board (PCB) at the board end of the spacer (SPC) to be made either with a resilient contact (RC) at the board end of the conductive strip (STR) or by a more permanent means such as soldering the board end of the conductive strip (STR) to the conductive track (TR). In another embodiment of the present invention, the conductive strips (STR) are not buried within the spacer (SPC) but rather lie on one or other face of the spacer (SPC), preferably but not necessarily, within appropriately cut grooves in the face of the spacer (SPC). Wherever it is necessary for a resilient contact (RC) to protrude past a face of the spacer (SPC) which is opposite the face where the conductive strips lie, then holes are cut through the spacer to allow the resilient contacts to protrude past the required face of the spacer.

According to a preferred embodiment of the present invention, it is arranged that the chip end of the spacer have a first thickness while the board end of the spacer has a second thickness, larger than the first thickness. In this way the spacer presents a step along its longitudinal direction. An example of this is shown in Fig. 5. This step may then serve as a stop (STP) to limit the travel of the chip card as it is inserted into the slot. Fig. 5 also illustrates the use of holes in the spacer to allow the resilient contacts to protrude past a face of the spacer.

In another preferred embodiment of the present invention, the spacer is incorporated as part of a guide (GDE) whose exterior dimensions substantially follow all or part of the outline of the housing. This is illustrated in Fig. 6. During manufacture of a PCMCIA module which incorporates the interface device (IF), it is then a simple affair to place the guide (GDE) comprising the spacer (SPC) on top of the bottom case (BC), place the printed circuit board (PCB) on top, preferably already connected to the connector panel (CON), and then close the whole assembly (top case, bottom case, guide including spacer with embedded strips and resilient contacts, printed circuit board and connector panel) using the top case (TC). The closing of the assembly may make use of soldering or welding techniques or adhesive products to keep the assembly permanently shut or it may make use of clips in the case that it may be required to have access to the inside of the housing after assembly.

Another advantage associated with the use of the plastic spacer, apart from having the entirety of the resilient contacts and the conductive strips in one easy-to-assemble part, is that the housing can then be made entirely of a metallic material, which has preferable characteristics with respect to dissipation of heat and shielding from electromagnetic interference.

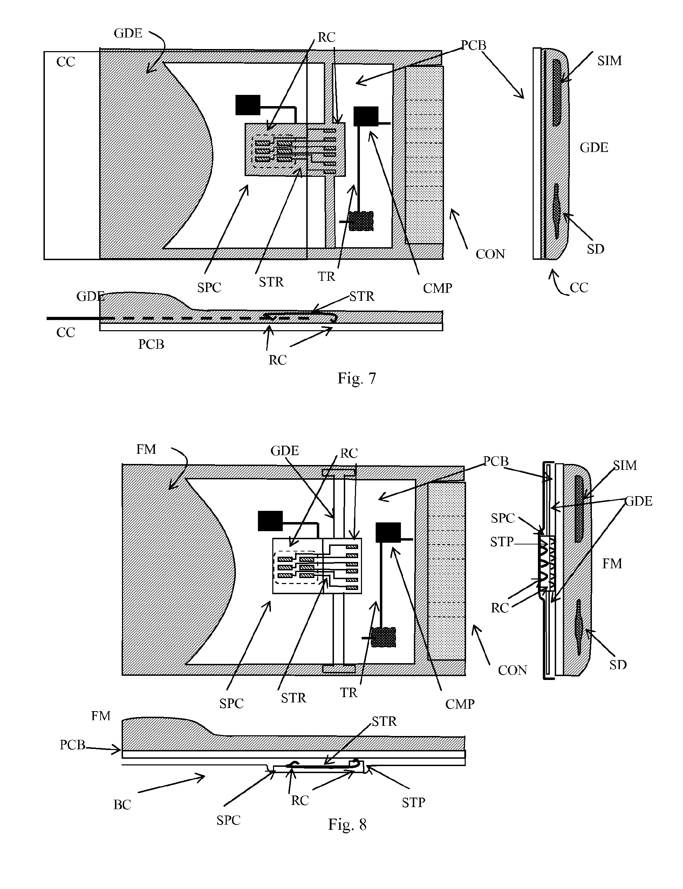

Fig. 7 shows several views of a frame and printed circuit board assembly in which an embodiment of the present invention may be deployed. (For the purpose of clarity the end view does shows neither the spacer nor the resilient contacts). In this example the device further comprises a frame (FM) which substantially follows the contour of the interface device. The frame fits over the printed circuit board. In this embodiment the frame comprises a first slot (SIM) for receiving a SIM card and a second slot (SD) for receiving an SD-card. The SIM card and the SD card, when inserted into the slots then make contact to appropriate terminals on the printed circuit board and serve as supplementary interfaces to the interface device. This allows an interface device according to this embodiment of the present invention to be used as an interface between either and any of an electronic chip to a host device, a SIM card to a host device or an SD-card to a host device. In this embodiment the frame further comprises the spacer. The spacer in this embodiment therefore lies on top of the printed circuit board as shown i.e. between the printed circuit board and the top case. The chip card is therefore inserted with the contact pads facing up - i.e. away from the printed circuit board or towards the top case.

Another embodiment of the present invention is shown in Fig.8, where the spacer is not comprised on the frame. Instead the spacer is placed between the bottom case and the printed circuit board. In this embodiment the profile of the bottom case has been modified to allow for the addition of the frame while still ensuring that the housing complies with the PCMCIA Standard dimensions. The frame is placed on top of the printed circuit board with the connector panel attached to the printed circuit board. The whole assembly is housed in between the top case and the bottom case. For the purpose of clarity the chip card is not shown in Fig.8. In the embodiment illustrated in Fig. 8 the spacer is part of a guide, which helps to place the spacer properly during assembly.

By removing the dependency on the standard chip-card connector of the CAMs of PCMCIA format in the prior art, the invention, according to a preferred embodiment of the present invention, better use is made of the available space on the printed circuit board. Indeed, by placing the conductive strips with their resilient contacts either in the housing or including them in the spacer, this frees up an area of the printed circuit board close to the connection panel to allow speed-critical electronic components to be placed here. Conductive tracks which carry speed-critical signals may also therefore be made significantly shorter. In this way, heat dissipation and electromagnetic interference issues can be more appropriately managed. Mechanical strength of the printed circuit board is preserved since no holes need be cut in the printed circuit board to accommodate a chip card connector.

The gain in available real-estate described above, allowing for better use of the printed circuit board surface to be made, especially in the area where the smart-card connector would have been placed, was essentially achieved through using a set of conductive strips and resilient contacts thus described. However, it is worth noting that the same gain in available real-estate is also possible through the use of a contactless interface where a wireless communication is established between the chip on the chip card and the printed circuit board. This type of interface is however outwith the scope of the invention described herein.

It is worth noting that throughout this description the use of terms "top case" and "bottom case" do not necessarily imply restrictions as to the position of the respective cases. For example it is quite possible in an embodiment of the present invention to have the top case on top while the bottom case is on the bottom as it is equally possible to have the top case on the bottom and the bottom case on top.

## Claims

1. An interface device (IF) for conditional access to audio/video content, said interface device (IF) comprising a printed circuit board (PCB) having at least one conductive track (TR), said interface device (IF) **characterised in that**:
it comprises at least one conductive strip (STR) having a first end and a second end, at least said first end of said conductive strip (STR) comprising a resilient contact (RC), the second end of said conductive strip (STR) being adapted to connect electrically to the conductive track (TR), said electrical connection being on a first plane substantially coincident with a plane of the printed circuit board (PCB), said resilient contact (RC) being oriented towards the printed circuit board (PCB) and on a second plane parallel to and non-coincident with the printed circuit board (PCB).

2. The interface device (IF) according to claim 1, wherein said interface device (IF) complies with a PCMCIA Standard.

3. The interface device (IF) according to claim 1, wherein the interface device (IF) further comprises a non-conductive spacer (SPC) located between the first and second planes, said spacer (SPC) comprising said conductive strip (STR).

4. The interface device (IF) according to claim 3, wherein the spacer (SPC) comprises at least two ends, a first end having a first thickness (T1) and a second end having a second thickness (T2) larger than the first thickness (T1), said spacer thus presenting at least one step between said two ends.

5. The interface device (IF) according to either of claims 1 or 3, said interface device (IF) being suitable for connecting at least one contact pad (PD) of an electronic chip (CH) to a host device, said interface device (IF) further comprising:
a housing (H) comprising:
a top cover (TC); and
a bottom cover (BC); and
wherein said printed circuit board (PCB) is located in a cavity (CTY) within the housing (H);
the housing having a slot (SLT) for a chip card (CC) at a first end; and
being closed at a second end by a connector panel (CON) operable to
electrically connect the printed circuit board (PCB) to the host device,
said interface device (IF) further **characterised in that**:
said conductive strip (STR) is located within the cavity (CTY), such that the resilient contact (RC) is urged against the contact pad (PD) when a chip card (CC) comprising the electronic chip (CH) is inserted via the slot (SLT) into the cavity (CTY),
said contact pad (PD) being:
located on a face of the chip card (CC);
not touching an edge of the chip card (CC), and
facing away from the printed circuit board (PCB).

6. The interface device (IF) according to claim 5, wherein the conductive strip (STR) comprises a second resilient contact (RC) at its second end.

7. The interface device (IF) according to either of claims 5 or 6, wherein the interface device (IF) further comprises a non-conductive spacer (SPC) located in the cavity (CTY) in such a way as to leave an opening between the spacer (SPC) and the printed circuit board (PCB) through which the electronic card (CC) may be inserted, said spacer (SPC) comprising said conductive strip (STR).

8. The interface device (IF) according to claim 7, wherein the spacer (SPC) comprises at least one hole through which at least one of the resilient contacts (RC) protrudes.

9. The interface device (IF) according to either of claims 7 or 8, wherein the spacer (SPC) comprises at least two ends, a first end having a first thickness (T1) and a second end having a second thickness (T2) larger than the first thickness (T1), said spacer thus presenting at least one step between said two ends, said step serving as an abutment operable to limit a depth of insertion of the chip card (CC) into the cavity (CTY).

10. The interface device (IF) according to any of claims 7 to 9, wherein the interface device (IF) further comprises a guide (GDE) placed in the cavity (CTY), an outline of said guide (GDE) substantially following all or part of a contour of the housing (H), said guide (GDE) comprising the spacer (SPC).

11. The interface device (IF) according to any of claims 5 to 10, wherein said interface device (IF) is physically dimensioned to be compatible with a PCMCIA Standard.

12. A non-conducting spacer (SPC) adapted for use in an interface device according to either of claims 3 or 7.

13. The non-conducting spacer (SPC) according to claim 13, wherein said spacer (SPC) comprises two ends, a first end having a first thickness (T1), a second end having a second thickness (T2) greater than the first thickness (T1) thereby forming at least one step (ST) along a length of the spacer (SPC).

14. A method for assembling an interface device (IF) for conditional access to audio/video content, said interface device (IF) conforming to a PCMCIA Standard and comprising a printed circuit board (PCB) having at least one conductive track (TR) and at least one conductive strip (STR) having at least two ends, a first end comprising a resilient contact (RC), a second end adapted to form an electrical connection with the conductive track (TR), said method comprising:
placing said conductive strip (STR) in the interface device (IF) in such a way that its second end forms an electric contact with the conductive track (TR) and the resilient contact lies on a plane parallel and not coincident with a plane of the printed circuit board (PCB), said resilient contact facing the printed circuit board (PCB).
